# EUROPEAN PATENT SPECIFICATION

(11) **EP 0 531 957 B1**
(45) Date of publication and mention of the grant of the patent: **14.08.1996**
(21) Application number: 92115384.7
(22) Date of filing: 09.09.1992
(51) Int. Cl.: B29B 7/42, B29B 7/84

(54) **Apparatus for the recovery of heterogeneous waste, particularly heterogeneous waste plastic material**
Apparat zum Rekuperieren heterogener Abfälle, insbesonderen heterogener Kunststoff-Abfälle
Appareil de récupération de rebut hétérogène, en particulier de rebut hétérogène plastique

(30) Priority: 11.09.1991 IT TO910693
(43) Date of publication of application: 17.03.1993
(73) Proprietor: Fornasero, Renato, I-10135 Torino (IT)
(72) Inventor: Fornasero, Renato, I-10135 Torino (IT)
(74) Representative: Bosotti, Luciano

(56) References cited:
- FR-A- 2 322 723
- US-A- 3 023 455
- US-A- 3 680 844
- US-A- 5 044 759
- PATENT ABSTRACTS OF JAPAN vol. 9, no. 60 (M-364)(1783) 16 March 1985 & JP-A-59 194 821
- PATENT ABSTRACTS OF JAPAN vol. 10, no. 357 (M-540)(2414) 2 December 1986 & JP-A-61 154 810

## Description

The present invention deals with the problem of recovering heterogeneous waste raw materials and, in particular, heterogeneous waste plastics material.

In this regard, the invention constitutes an improvement in the arrangement described in prior European Patent 0 140 846 in the name of the same applicant. The invention described in this earlier European Patent makes it possible to recover or recycle scrap and waste heterogeneous plastics material, that is to say, plastics materials from different moulds or units, by the homogenisation of all the components. In particular, the arrangement according to this previous patent is based on a sequence of operations comprising, essentially:
- the grinding or chopping of the heterogeneous mass containing two or more plastics materials so as to produce fragments of these plastics materials,
- the cold mixing of the ground or chopped mass so as to obtain a uniform distribution of the fragments of the said plastics materials therein,
- a first heating stage in which the chopped, mixed mass is heated to a first temperature so as to obtain a mass in an initial state of plastification; and
- a second heating stage in which the said mass in the initial plasticised state is heated to a second temperature, greater than the said first temperature to give a homogeneous molten mass of recovered plastics material.

This arrangement, which has enabled particularly advantageous and sound results to be achieved, is based on the carrying out of heating stages without discontinuity between them and without rapid pressure or friction transitions, that is, by the application of low temperature gradients and low mechanical stresses to the plasticised, molten mass obtained from the waste. The apparatus described in this earlier patent is based essentially on a cold chopping and mixing unit and on a final hot mixing and homogenising unit with a chamber part of which has radial projections and an internal screw conveyor rotor constituted partially by thrust elements with varied directions.

The fundamentals underlying the solution of the prior patent, as well as being based on results obtained by the applicant, are also based on more profound theoretical research such as that documented in the article "Les Plastiques Hétérogènes" (Heterogeneous plastics materials) by Armand Ajdari e Ludwik Leibler appearing at pages 732 to 739 of the publication "La Recherche" No. 233, June 1991, Volume 22.

As regards the preparation of the chopped, mixed mass intended to be subjected to the first heating stage, European Patent 0 140 846 suggests that use is made of a bladed chopping element provided with a tubular hub into which extends the loading section of the screw conveyor intended to cause the mass to advance towards the heated tubular duct in which the two heating stages are performed. It is then arranged that, in the final part of the tubular duct in question, the diameter of the screw conveyor core gradually increases so as to result in a terminal portion in which the material is compressed in order to encourage the supply of the recovered material, which has been made homogeneous, to the subsequent treatment station, such as, for example, a static mixer.

Experiments conducted by the applicant show that the final results which can be achieved with this known arrangement can be further improved by giving particular attention to various aspects of the treatment process, that is to say:
- obtaining an extremely uniform distribution of all the plastics material in the body of chopped, mixed material to be subjected to the heat treatment so as to avoid the formation of islands of different species; and
- eliminating water or moisture from the mass subjected to treatment so as to avoid the formation, due to the heating, of significant quantities of steam and gas which can form bubbles in the treatment chamber which, as well as impeding the advance of the mass of material being treated, can give rise to a risk of explosion, and also
- thorough degasification of the material treated in the heating stage in order to avoid the formation of gases with a consequent obstruction to the advance of the material and again a risk here of explosion.

The present invention therefore aims to provide an improved device which, starting from the arrangement described in the earlier European Patent 0140846 after which the preamble of Claim 1 was patterned, allows a further improvement in the treatment results.

According to the present invention this object is achieved by apparatus having the further characteristics specifically set out in the characterising portion of Claim 1.

A preferred embodiment of the invention, as called for in Claim 6, involves certain features which-per se-are known e.g. from US-A-5044759.

The invention will now be described purely by way of non-limitative example, with reference to the appended drawings, in which:
Figure 1 illustrates schematically the structure of apparatus for the formation of an extremely homogeneous mixture of heterogeneous plastics materials; and
Figure 2 illustrates schematically the development of the core of a screw conveyor intended to advance the mixture obtained in the device of Figure 1 through two successive heat treatment stages.

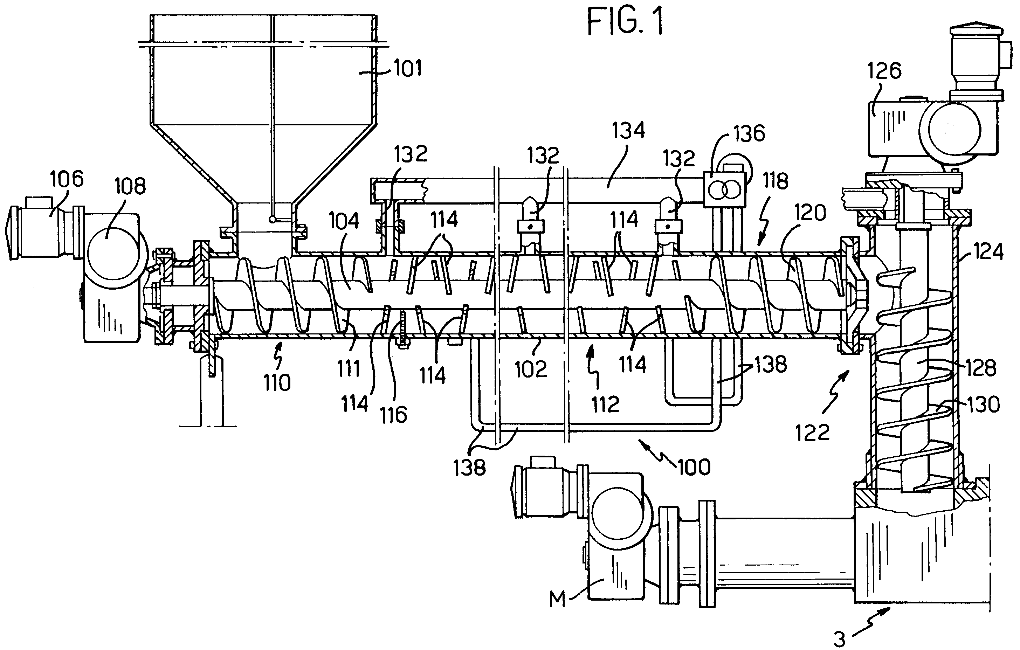

In order to establish ideas, the apparatus of Figure 1 is essentially a mixer-homogeniser which operates under cold conditions and is intended to supply the hot mixing and homogenising unit shown at least partially by the reference numeral 3 in the description and in the drawings of prior European Patent 0 140 846 The bulk of the inlet (or upstream) part of this unit is indicated schematically by the broken line in Figure 1 and is also indicated here with the reference numeral 3 for coherence of the description.

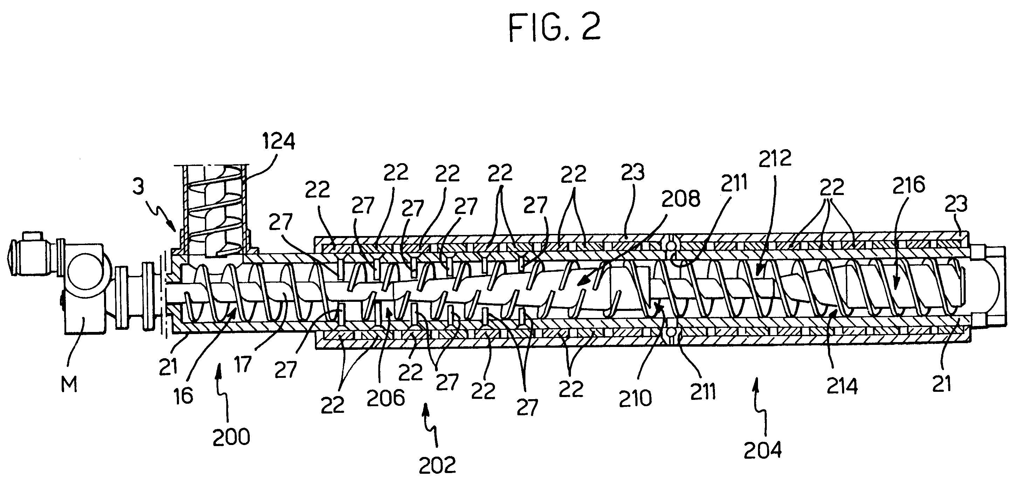

Similarly the screw conveyor core, shown in Figure 2, corresponds essentially to the core 17 of the rotary screw conveyor element indicated 16 in the description and drawings of the prior European Patent 0 140 846 For this reason the same numbering has also been preserved in the Figure 2 appended to the present description. In a similar way, the tubular casing within which the screw conveyor element 16 extends has been indicated 21. The wall of the casing 21 is usually made from a material which is a good conductor of heat, for example a metal, and its central section is surrounded by a plurality of electrical resistance heating elements 22 or similar heating elements (such as, for example, ducts for a flow of diathermic oil) which enables the chamber within the casing 22 to be brought to predetermined temperatures which usually differ in the various longitudinal portions of the casing 21. The heating elements 22 are enclosed in a further tubular casing of heat-insulating material 23 shaped in such a way as to resist the outward dispersion of heat from the apparatus.

Equally known is the presence of fixed elements or projections 27 which project inwardly from the tubular casing 21 towards the helical threads of the screw conveyor 16 so as to improve the mixing action exerted on the material during treatment.

Returning to the cold mixing device of Figure 1, generally indicated with the reference numeral 100, it can be seen that the structure thereof is substantially similar in many ways to the structure of the screw conveyor 16 described in the prior patent 0140846. It should, however, be noted that the mixer 100 is intended essentially to operate on cold material, that is, on material which is supplied from outside, for example from a bladed chopper through a hopper 101.

The mixing device 100 is constituted essentially by a screw conveyor defined by a tubular casing 102 within which extends a conveyor screw whose shaft or core 104 is rotated by an electric motor 106 via a reduction gear 108. As far as the distribution of the flights or threads on the core 104 is concerned, it is possible to divide the longitudinal development of the mixer 100 into three sections in cascade.

The first section, which functions as a loading section, is indicated here with the reference numeral 110; it comprises a certain number of turns of a continuous screw thread 111 (for example 4 or 5 turns or steps) the dimensions of which, together with those of the core 104, are commensurate with the treatment capacity of the plant in which the mixing device 100 is installed. The function of the input section 110 is therefore essentially to receive the chopped material coming from the hopper 101 and to start its advance through the casing 102 while at the same time beginning a rotary mixing thereof.

In the intermediate section, indicated 112, the continuous turns or steps of the thread 111 of the input section 110 are replaced by several offcuts of a helical thread 114, each of which has a predetermined angular extent, for example 90⁰ or less. A further characteristic of the intermediate section 112 is that the sections or offcuts of successive threads do not all have the same winding sense, or handedness, concordant with that of the thread of the input section 110 but, on the contrary, have winding senses which are opposed in a generally alternating sequence.

The purpose of these thread sections 114 of opposite hand is to encourage very intense mixing of the mass of chopped waste which advances through the mixer 100. This mixing can be made even more intimate by the provision of teeth or projections 116 (only one of which is illustrated in the drawing) on the wall of the intermediate section 112 of the tubular casing 102 and which project towards the core 104 of the conveyor screw (naturally in paths which do not interfere with the paths of the thread sections 114) so as to cooperate with these sections in achieving the mixing and homogenisation of the mixture of chopped materials present within the mixer 100.

Finally, in the final or output section of the mixer itself, generally indicated 118, the core 104 again has a continuous or substantially continuous helical thread 120 whose sense of winding, correlated with the sense of rotation imparted to the core 104, is the same as the sense of the thread 111 in the input section 110. This, evidently, is the sense which promotes the general advance of the material through the mixer 100.

The output section 118 has the function of sending the intimately mixed heterogeneous material towards an outlet 122 which is connected, in a generally sideways-on configuration, to another screw conveyor 124 driven by a respective motor 126. The function of the conveyor 124, which usually comprises a screw with a core 128 of constant diameter carrying a thread 130 of constant pitch and diameter, is essentially to supply the mixture of chopped heterogeneous materials obtained in the mixer 100 regularly to the treatment unit 3 which has already been described above.

In the upper part of the casing 102 of the mixer, usually in the central portion 112 thereof, there are provided various aeration ducts 132 leading to a manifold 134. The output of the latter is connected to a pumping and heating device (heating fan) 136 which supplies further ducts 138 situated in the lower part of the casing 102 of the mixer. All this is to set up a circulating flow of moderately hot air (temperature of the order of 60-80⁰c) within the mixing chamber, and especially in the intermediate portion 112 thereof, the function of which is that of completely dehumidifying the material subject to the cold homogenisation treatment.

It will be appreciated therefore that the mixer 100 is able to effect the mixing and dispersion of the various elements constituting the heterogeneous mass of chopped material, the drying of the material and the controlled introduction of the mass into the plasticising or homogenising unit 3 situated downstream.

In this respect, the presence of the intermediate screw conveyor 124 makes it possible to avoid the need to tie the speed of the mixer 100 too closely to the speed of the homogenisation unit 3 situated downstream. Naturally the screw conveyor will have to have a smaller diameter than that of the inlet opening of the unit 3 for a return of any surplus material to the hopper.

As far as the speeds of rotation of the motors 106 and 126 are concerned, these can be regulated automatically in dependence on the need to introduce material into the unit 3, for example with a command generated (in a manner known per se) by pulses determined by the locally induced pressure in the material.

Passing now to the illustration of the structure of the core 17 of the screw conveyor of Figure 2, it is possible to identify therein three parts or sections indicated 200, 202, 204 respectively.

The first portion 200 is essentially a supply portion including a certain number of coils or turns (for example ten turns) of a continuous screw thread projecting from the core 17 and with a constant diameter (for example 85mm with an internal diameter of the casing 21 of 150mm). This essentially defines a loading section intended to cause the advance of the intimately mixed material coming from the mixer 100 towards the central portion of the treatment unit 3 itself.

The central section 202 is essentially the portion over which the heating elements 22 extend, and in which the plasticising treatment and actual melting is achieved in the terms described in the prior European Patent 0 140 846. As regards an explanation of the details of this treatment, reference should be made to the description of this earlier patent.

A salient characteristic for the purposes of carrying out the present invention is that the diameter of the core of the conveyor screw 16 in the intermediate portion 202 does not remain constant but is subject to a gradual increase. In this respect it should be noted that, in the schematic drawing of Figure 2, the ratios between the magnitude of variation of the diameter of the core and the overall length of the conveyor screw have been exaggerated deliberately to show in the illustration.

By way of example, the core in question may include an input section 206 of constant diameter extending over a length equal to four turns of the thread and then a subsequent section 208, for example of the length of eight turns of the thread, in which the diameter of the screw core increases gradually with a generally constant progression, for example, increasing from 85mm to 105mm (still with reference to an internal diameter of the tubular casing 21 of about 150mm). By way of reference, in the zone in question, the pitch of the screw thread of the screw conveyor may be about 126mm.

In this respect it should be noted that, in accordance with the teaching expressed in the prior European Patent 0 140 846, the thread or turns present in the central portion 202 are not, in general, continuous but comprise segments or arcs of thread having, above all, opposite senses of winding. Naturally, with reference to this section, the indication of pitch value is however intended to be taken in a dimensionally geometric sense, even though it is not always intended to have a direct comparison with the pitch of a continuous helical thread.

The substantial increase in the diameter of the screw conveyor core stops (for example around the value of 105mm indicated previously) at the beginning of the end section 204 of the conveyor screw itself. The diameter indicated above is maintained for a short section (for example 2.5 pitches) and then gives way, at 210, to a sharp discontinuity corresponding to a practically immediate return (with the formation of a shoulder) of the diameter of the core 17 to a value for example of the order to 80mm.

This rapid and sudden reduction in the diameter of the core 17 corresponds, in practice, to a sharp increase in the radial extent of the annular space defined between the outer surface of the core and the inner surface of the casing 21: this is the space into which flows the material which leaves the heat treatment performed in two stages in the intermediate portion 202. This rapid and immediate increase in the space available to the molten material leaving the heat treatment answers various requirements.

In the first place it favours the relaxation of the material as already indicated in the earlier European Patent 0140846.

Above all the discontinuity 210 has the object of acting as a plenum chamber for any gas which may form in the mass being treated. In this section of the casing 21, one or more holes or slots 211 are provided for the escape of the gas which collects in this section.

Naturally these apertures have associated unidirectional valves the function of which is essentially to allow the gas formed within the casing 21 to escape to the outside of the casing itself whilst nevertheless preventing air from penetrating the casing from the outside.

As already stated, the degassing arrangements make it possible to avoid the explosion of any combustible gases which may form in the treatment chamber and principly to enable sufficient thrust to be generated without such risk as to force the homogenised mass towards the output and into the final units for the formation of sheets, plates, thin strings and shaped profiles.

Downstream of the sharp reduction in diameter at 210, the core has a constant diameter for a certain length 212 (for example for the length of three turns) after which there is a relatively short section 214 (for example of the length of 5½ turns) over which there is a gradual fresh increase in the diameter of the core which returns, in a final section 216 (also of a length of 5½ turns, for example), to a diameter substantially corresponding to the maximum diameter reached upstream of the disconnuity 210, or to a value slightly less than this (for example 102mm).

The gradual increase in the diameter of the core at 214 has essentially the function of encouraging a fresh compaction of the material with a view to its delivery in the form of a compact, uniform mass at the output of the treatment unit 3. As far as the further treatment of this homogeneous mass of recovered plastics material is concerned, reference is made to the indications already expressed in the earlier European Patent 0 140 846 already cited several times in the course of the present description.

In this respect, the molten homogenised mass can be conveyed to a volumetric metering device formed by a chamber and piston hydraulically controlled and regulable in accordance with the volume needed for the workpieces to be formed by the introduction of the homogenised molten mass into moulds fitted in a vertical hydraulic press in order to form products of large dimensions and simple shape. Alternatively, the homogenised molten mass can be subjected to calendering with associated drawing to form profiles by extrusion, or to treatment in an output head having a series of rollers of variable speed for forming profile sections by drawing.

As a further alternative the homogenised molten mass can be subjected to gagging to obtain a continuous band of a given thickness (for example 4mm), the continuous band subsequently being subjected to cutting into cubes or hot granulation in a mill with air cooled cutters so as to form chips for use in the injection moulding of various products.

In all the operations described above, the cooling of the molten mass can be controlled so as to obtain a gradual stress reduction in the relaxation phase, avoiding viscous deformation by shrinkage or cavitations in the mass itself.

It is noted in particular that, with the apparatus described, it is possible to operate on waste materials containing a cellulose fraction and/or materials such as sawdust, mineral dust or thermosetting plastics or else on polymer waste of greater value so as to obtain compositions of high mechanical strength or of higher elastic modulus so as to confer on the products the characteristics necessary for their requirements of use. In particular, various tests have been conducted on materials containing compressed paper (possibly paper contained in solid urban refuse) in proportions of up to 40-50% by weight. The paper in question is preferably minced before introduction into the hopper 101 thereby reducing it to very small pieces, for example with maximum dimensions of the order of 5mm. The paper may possibly be hydrolysed (for example by means of acids) in view of the homogenisation process. The result is advantageously positive in that the resulting mass is well homogenised without evident traces of the cellulose in that it is dispersed internally.

Naturally, the principles of the invention remaining the same, the details of construction and the embodiments can be varied widely with respect to what has been described and illustrated, without thereby departing from the ambit of the present invention.

## Claims

1. Apparatus for subjecting a chopped, mixed heterogeneous mass of two or more plastics materials, to a heat treatment in at least one stage to obtain a homogeneous molten mass of recovered plastics material, the apparatus including a screw conveyor (16) with a core (17), characterised in that the said core (17) has at least one of the following characteristics:
- the diameter of the said core (17) gradually increases at least in a region (208) of the said screw conveyor (16) in which the said mass is subjected to the said heat treatment in at least one stage, and
- the diameter of the said core (17) has a rapid reduction in a region (210) situated immediately downstream of the region in which the said mass is subjected to the said at least one heat treatment stage.

2. Apparatus according to Claim 1 characterised in that the said gradual increase in the diameter of the core in the said first region (208) takes place with a generally constant progression.

3. Apparatus according to Claim 1 characterised in that the said rapid reduction results in the formation of a shoulder (210) on the said core (17).

4. Apparatus according to Claim 1 or Claim 2 characterised in that the region (208) in which the diameter of the core (17) gradually increases is preceded by at least one region (206) in which the core (17) has a generally constant diameter.

5. Apparatus according to Claim 1 or Claim 3 characterised in that, generally downstream of the said rapid reduction (210), the diameter of the said core has a further gradually increasing region (214) so as to form a zone in which the chopped mass is compressed.

6. Apparatus according to any of Claims 1 to 5, wherein from said heterogeneous mass of two or more chopped plastics materials, a mixed mass containing a uniform distribution of the fragments of the said chopped materials, is obtained to be subjected to said heat treatment, said apparatus comprising :
- a casing (102) defining a generally tubular mixing chamber having an inlet end (111) for the heterogenous mass and an outlet end (122) for the mixed mass,
- screw conveyor means acting within the casing (102) between the inlet end (111) and the outlet end (122) and including at least one portion (112) in which the core (104) of the said screw conveyor has associated helical screw thread portions (114) with opposite winding senses from one another for achieving an intimate mixing of the said chopped mass.

7. Apparatus according to Claim 6 characterised in that the casing (102) has associated projection means (116) projecting inwardly of the mixing chamber and intended to cooperate with the helical thread portions (114) to achieve the mixing of the said chopped mass.

8. Apparatus according to Claim 6 or Claim 7 characterised in that the said at least one portion (112) is located in a generally intermediate position with respect to the longitudinal development of the casing (102).

9. Apparatus according to Claim 8 characterised in that, respectively upstream and/or downstream of the said portion (112), the screw conveyor includes respective inlet and/or outlet portions (110, 118) in which the core of the said conveyor screw has a substantially continuous helical thread.

10. Apparatus according to any one of preceding Claims 6 to 9, characterised in that the casing (102) has associated tapping means (132) for drawing off a gaseous mass and reintroduction means (138) for a gaseous mass, as well as pumping means (136) for establishing a gaseous, preferably heated, flow (136) between the tapping means (132) and the reintroduction means (138) intended to cause the dehumidification of the said chopped mass during mixing.

11. Apparatus according to Claim 10 characterised in that tapping means (132) and the reintroduction means (138) are disposed, respectively, in the upper region and in the lower region of the said mixing chamber.

12. Apparatus according to any one of the preceding Claims 6 to 11, characterised in that the port associated with the inlet end (111) is a loading hopper (101).

13. Apparatus according to any one of the preceding Claims 6 to 12, characterised in that the said outlet end (122) has associated therewith a further screw conveyor device (124) for the controlled transport of the said mixed mass.

## Patentansprüche

1. Vorrichtung zur Wärmebehandlung einer zerkleinerten, gemischten heterogenen Masse aus zwei oder mehreren Kunststoffen in mindestens einem Arbeitsschritt zur Herstellung einer homogenen geschmolzenen Masse aus wiedergewonnenem Kunststoff, wobei die Vorrichtung eine Förderschnecke (16) mit einem Kern (17) umfaßt, dadurch gekennzeichnet, daß der Kern (17) mindestens eines der folgenden Merkmale aufweist:
- der Durchmesser des Kerns (17) nimmt allmählich in mindestens einem Bereich (208) der Förderschnecke (16) zu, in welchem die genannte Masse in mindestens einem Arbeitsschritt der Wärmebehandlung unterworfen wird, und
- der Durchmesser des Kerns (17) weist eine abrupte Verringerung in einem Bereich (210) auf, der unmittelbar nach jenem Bereich angeordnet ist, in dem die genannte Masse der mindestens einen Arbeitsschritt umfassenden Wärmebehandlung unterworfen wird.

2. Vorrichtung nach Anspruch 1, dadurch gekennzeichnet, daß die allmähliche Zunahme des Durchmessers des Kerns im ersten Bereich (208) im wesentlichen konstant fortlaufend erfolgt.

3. Vorrichtung nach Anspruch 1, dadurch gekennzeichnet, daß die abrupte Durchmesserverringerung die Bildung einer Schulter (210) am Kern (17) bewirkt.

4. Vorrichtung nach Anspruch 1 oder Anspruch 2, dadurch gekennzeichnet, daß dem Bereich (208), in dem der Durchmesser des Kerns (17) allmählich zunimmt, mindestens ein Bereich (206) vorausgeht, in dem der Kern (17) einen im wesentlichen konstanten Durchmesser hat.

5. Vorrichtung nach Anspruch 1 oder Anspruch 3, dadurch gekennzeichnet, daß der Durchmesser des Kerns etwas nach der abrupten Durchmesserverringerung (210) einen weiteren, sich allmählich vergrößernden Bereich (214) aufweist, sodaß sich eine Zone bildet, in der die zerkleinerte Masse komprimiert wird.

6. Vorrichtung nach einem der Ansprüche 1 bis 5, dadurch gekennzeichnet, daß aus der genannten heterogenen Masse aus zwei oder mehreren zerkleinerten Kunststoffen eine gemischte Masse entsteht, die eine gleichmäßige Verteilung der Teile des zerkleinerten Materials aufweist und der genannten Wärmebehandlung unterworfen wird, wobei die Vorrichtung umfaßt:
- ein Gehäuse (102), welches eine im wesentlichen rohrförmige Mischkammer mit einem Einlaßende (111) für die heterogene Masse und ein Auslaßende (122) für die gemischte Masse begrenzt,
- Förderschneckenmittel, die im Gehäuse (102) zwischen dem Einlaßende (111) und dem Auslaßende (122) wirken und mindestens einen Abschnitt (112) umfassen, in dem der Kern (104) der genannten Förderschnecke zugehörige schraubengewindeabschnitte (114) mit entgegengesetztem Windungsverlauf aufweist, um ein inniges Mischen der zerkleinerten Masse zu erreichen.

7. Vorrichtung nach Anspruch 6, dadurch gekennzeichnet, daß das Gehäuse (102) zugehörige Vorsprünge (116) aufweist, die sich von der Mischkammer nach innen erstrecken und so beschaffen sind, daß sie mit den Schraubengewindeabschnitten (114) so zusammenwirken, daß ein Mischen der zerkleinerten Masse erreicht wird.

8. Vorrichtung nach Anspruch 6 oder Anspruch 7, dadurch gekennzeichnet, daß der zumindest eine Abschnitt (112) im wesentlichen mittig in bezug auf die Längserstreckung des Gehäuses (102) angeordnet ist.

9. Vorrichtung nach Anspruch 8, dadurch gekennzeichnet, daß die Förderschnecke vor und/oder nach dem Abschnitt (112) entsprechende Einlaß- und/oder Auslaßbereiche (110, 118) umfaßt, in denen der Kern der Förderschnecke ein im wesentlichen fortlaufendes Schraubengewinde hat.

10. Vorrichtung nach einem der vorhergehenden Ansprüche 6 bis 9, dadurch gekennzeichnet, daß das Gehäuse (102) zugehörige Auslaßmittel (132) zum Abziehen einer gasförmigen Masse und Mittel (138) zum Wiedereinführen einer gasförmigen Masse, sowie Pumpmittel (136) aufweist, um einen gasförmigen, vorzugsweise erhitzten, Fluß (136) zwischen den Auslaßmitteln (132) und den Wiedereinführmitteln (138) herzustellen, der das Entfeuchten der zerkleinerten Masse während des Mischens bewirkt.

11. Vorrichtung nach Anspruch 10, dadurch gekennzeichnet, daß die Auslaßmittel (132) und die Wiedereinführmittel (138) im oberen Bereich bzw. im unteren Bereich der Mischkammer angeordnet sind.

12. Vorrichtung nach einem der vorhergehenden Ansprüche 6 bis 11, dadurch gekennzeichnet, daß die dem Einlaßende (111) zugehörige Öffnung ein Fülltrichter (101) ist.

13. Vorrichtung nach einem der vorhergehenden Ansprüche 6 bis 12, dadurch gekennzeichnet, daß dem Auslaßende (122) eine weitere Förderschneckeneinrichtung (124) für den kontrollierten Transport der gemischten Masse zugeordnet ist.

## Revendications

1. Appareil pour soumettre une masse hétérogène mélangée concassée, de deux matières plastiques ou plus, à un traitement thermique en au moins une étape pour obtenir une masse fondue homogène de matière plastique de récupération, l'appareil comprenant une vis de transport (16) avec une âme (17), caractérisé en ce que ladite âme (17) a au moins l'une des caractéristiques suivantes :
- le diamètre de ladite âme (17) augmente progressivement au moins dans une région (208) de ladite vis de transport (16) dans laquelle ladite masse est soumise audit traitement thermique en au moins une étape, et
- le diamètre de ladite âme (17) connaît une réduction rapide dans une région (210) située immédiatement en aval de la région dans laquelle ladite masse est soumise à ladite étape de traitement thermique au nombre d'au moins un.

2. Appareil selon la revendication 1, caractérisé en ce que ladite augmentation progressive du diamètre de l'âme dans ladite première région (208) se fait selon une progression globalement constante.

3. Appareil selon la revendication 1, caractérisé en ce que ladite réduction rapide conduit à la formation d'un épaulement (210) sur ladite âme (17).

4. Appareil selon la revendication 1 ou 2, caractérisé en ce que la région (208) dans laquelle le diamètre de l'âme (17) augmente progressivement est précédée d'au moins une région (206) dans laquelle l'âme (17) a un diamètre globalement constant.

5. Appareil selon la revendication 1 ou 3, caractérisé en ce que, globalement en aval de ladite réduction rapide (210), le diamètre de ladite âme a une autre région à augmentation progressive (214), de manière à former une zone dans laquelle la masse concassée est comprimée.

6. Appareil selon l'une quelconque des revendications 1 à 5, dans lequel, à partir de ladite masse hétérogène de deux ou plus matières plastiques concassées, on obtient une masse mélangée contenant une distribution uniforme des fragments desdites matières concassées à soumettre audit traitement thermique, ledit appareil comprenant :
- un compartiment (102) définissant une chambre de mélange globalement tubulaire ayant une extrémité d'entrée (111) pour la masse hétérogène et une extrémité de sortie (122) pour la masse mélangée,
- des moyens à vis de transport agissant dans le compartiment (102) entre l'extrémité d'entrée (111) et l'extrémité de sortie (122) et comprenant au moins une partie (112) dans laquelle l'âme (104) de ladite vis de transport est associée à des parties à pas de vis hélicoïdal (114) avec des sens d'enroulement opposés l'un de l'autre pour réaliser un mélange intime de ladite masse concassée.

7. Appareil selon la revendication 6, caractérisé en ce que le compartiment (102) a des moyens associés formant saillie (116) dépassant vers l'intérieur de la chambre de mélange et destinés à coopérer avec les parties à pas de vis hélicoïdal (114) pour réaliser le mélange de ladite masse concassée.

8. Appareil selon la revendication 6 ou 7, caractérisé en ce que ladite partie (112) au nombre d'au moins un est située en une position globalement intermédiaire par rapport à l'étendue longitudinale du compartiment (102).

9. Appareil selon la revendication 8, caractérisé en ce que, respectivement en amont et/ou en aval de ladite partie (112), la vis de transport comprend des parties d'entrée et/ou de sortie respectives (110, 118) dans lesquelles l'âme de ladite vis de transport a un pas de vis hélicoïdal sensiblement continu.

10. Appareil selon l'une quelconque des revendications 6 à 9, caractérisé en ce que le compartiment (102). a des moyens d'évacuation associés (132) pour aspirer une masse gazeuse et des moyens de réintroduction (138) d'une masse gazeuse, ainsi que des moyens de pompage (136) pour établir un écoulement gazeux (136), de préférence chauffé, entre les moyens d'évacuation (132) et les moyens de réintroduction (138), afin de provoquer une déshumidification de ladite masse concassée pendant le mélange.

11. Appareil selon la revendication 10, caractérisé en ce que les moyens d'évacuation (132) et les moyens de réintroduction (138) sont disposés, respectivement, dans la région supérieure et dans la région inférieure de ladite chambre de mélange.

12. Appareil selon l'une quelconque des revendications 6 à 11, caractérisé en ce que l'orifice associé à l'extrémité d'entrée (111) est une trémie de chargement (101).

13. Appareil selon l'une quelconque des revendications 6 à 12, caractérisé en ce que ladite extrémité de sortie (122) a, un autre dispositif à vis de transport (124) qui lui est associée, pour le transport contrôlé de ladite masse mélangée.
